# EUROPEAN PATENT SPECIFICATION

(11) **EP 3 604 233 B1**
(45) Date of publication and mention of the grant of the patent: **08.04.2026**
(21) Application number: 18186996.7
(22) Date of filing: 02.08.2018
(51) Int. Cl.: C02F 1/32

(54) **WATER DISINFECTION SYSTEM**
WASSERDESINFEKTIONSSYSTEM
SYSTÈME DE DÉSINFECTION D'EAU

(43) Date of publication of application: 05.02.2020
(73) Proprietor: Xylem Europe GmbH, 8200 Schaffhausen (CH)
(72) Inventor: MORNINGSTAR, Leroy Jack, Charlotte, NC, 28273 (US); ROEHRING, Birk, 32257 Bünde (DE); ROSE, Nicolas, 32429 Minden (DE)
(74) Representative: Lenzing Gerber Stute

(56) References cited:
- CN-A- 102 398 957
- US-A- 5 952 663

## Description

The present invention relates to a water disinfection system according to claim 1.

Disinfection systems for water and wastewater treatment utilizing ultraviolet radiation are known in the art and are in wide-spread use. The size of the systems ranges from single lamp installations, which are connected directly to a point of use, to systems with hundreds of UV lamps for the disinfection of effluents of municipal wastewater or for the drinking water supply of cities.

Systems are generally described such that they comprise ultraviolet radiators in the form of gas discharge UV lamps of different kinds, mainly in the form of low pressure mercury amalgam lamps. These lamps are provided with a surrounding protective sleeve made of UV transparent glass or quartz which prevent direct contact of the lamp body with the water. In the present context, the assembly of a radiator and the sleeve tube will simply be referred to as a "lamp".

A part of the systems are constructed as open channel systems, in which the water flows inside a channel with concrete bottom and side walls. The systems are sized so that a number of lamps can be disposed in a parallel arrangement in a direction transverse to the flow of water forcing the water to pass between adjacent lamps so that the radiation intensity is sufficiently high even in wider channels. The arrangement of lamps in parallel groups is commonly called an array. The lamps in the array are inclined with respect to the water flow in an acute angle, which allows the relatively long lamps to be placed in a channel with a depth less than the length of the lamps.

Other known systems, which are not elements of the closest prior art, utilize vertical or horizontal lamp arrays.

Arrays are held in frames which first of all hold the lamps securely in place, and, in many cases, secondly allow the placement and retrieval of the array into and out of the channel.

Known systems that allow the retrieval of the arrays from the channel by lifting the frame utilize a guiding system that guides the respective frame during the lifting or lowering process and that additionally defines a certain position of the frame in and out of the channel. Such guiding systems include linear rails and hinges which hold the frame when being lifted. The guiding system may include a dedicated drive means, or the lifting may be effected manually or by use of a crane.

In the prior art, patent US 5,564,765 discloses a system in which lamps are arranged in a vertical orientation, hence the necessary depth of the channel is large.

US 5,208,461 and WO 2012/079149 A1 show systems with inclined lamp which are held in frames. The frames are mounted in hinges, so that the frames with the lamps can be tilted upwards out of the channel. The raised position of the frame is determined by the hinge geometry.

The patent application US 2016/0304362 discloses a system with inclined lamps which are mounted to frames. The frames are guided in linear guide rails and can be raised out of the channel in the direction of the rails, which are parallel to the lamps. Again, the position of the raised frame is defined by the geometry of the guide rails. Furthermore, each frame needs a dedicated rail system, which adds to the total cost of the system.

US 5,952,663 A discloses a system with UV lamps held in a stand-alone frame which can be lifted out of a channel and lowered into the channel using a standard crane and two eyelets at the top of the frame. No guide rails or similar installations in the channel are disclosed. The eyelets are connected to the side walls 26 on opposite sides with an offset. The lamps are located between an upper header and a lower header and may extend between the headers at various angles to vertical, including horizontal.

CN 102 398 957 A discloses a system with a bracket for supporting each lamp assembly, the lamp assembly being coupled to the bracket for easy and individual removal of the assembly by hand. Thereby it can be avoided that a number of lamp assemblies must be integrally raised when UV tube replacement is required. The lamps of each lamp assembly shall be inclined. The angle of inclination is limited to the geometry of the mechanism for attachment of the assembly within the channel.

It is therefore an object of the present invention to provide a water disinfection system with the features of the preamble of claim 1, which is more cost-efficient in production and maintenance. It is another object of the present invention to provide a water disinfection system with the features of the preamble of claim 1 which can be lifted out of the channel and placed into the channel without dedicated guide elements and thus, when lifted out of the channel, can be placed at any convenient position so that access to the frame and the array of lamps as well as their maintenance can more easily be carried out.

These objects are achieved by a water disinfection system with the features of claim 1. Further advantageous features are the subject matter of the dependent claims, individually or in combination.

A water disinfection system comprising
- a flow-through treatment chamber with an inlet and an outlet for the water in an open channel, the inlet and the outlet defining a flow direction of a flow of water,
- a plurality of elongated ultraviolet lamps positioned parallel to each other in at least one array within said treatment chamber which at least one array is disposed at an acute angle with respect to and transverse to the flow of water so that the water must pass through the array,
- a frame which holds in place the lamps of the array and which is constructed so that all lamps of the at least one array can be lifted out of the chamber simultaneously by lifting the frame, is further improved in that
- the frame is a stand-alone frame with a cuboid outer shape, the frame having in the direction of the flow of water:
   -- an upstream end with two vertical front frame members and two horizontal front frame members,
   -- a downstream end with two vertical rear frame members and two horizontal rear frame members, and
   -- a frame centre section with two lower side frame members and two upper side frame members,
- wherein the at least one array is contained inside the cuboid shape and
- wherein the frame is positioned in the chamber and has attachment elements for attaching the frame to a lifting mechanism. Therefore, the frame can be positioned in the channel and lifted out of the channel in an unguided manner, i.e. without the need for guide rails or hinges. Especially, the use of one single crane for a complex system with plurality of frames becomes possible. Savings in installation and maintenance costs are given, and the increase with the number of frames in the installation.

The acute angle is in the range between 30 to 60 degrees, especially between 40 and 50 degrees.

The frame is not fixed to the chamber. The frame can then simply be lowered into the channel and remain there by its own weight. There is no need for any installations on the channel walls.

In a preferred embodiment, the frame, when being lifted by the lifting mechanism, is freely movable in the direction of the flow of water and in the vertical direction.

For an easy and secure attachment to a crane harness, the attachment elements are positioned at the four upper corners of the frame.

Preferably, the attachment points are eyelets or openings, for example in the form of rings or oval openings similar to the corner castings known from shipping containers.

The UV radiation can efficiently penetrate the water when the frame has an open front face, an open rear face, open side faces and optionally also an open bottom face. Thus, the radiation can impinge onto the channel walls with only minimal shadowing in the areas covered by the members defining the outer cuboid shape of the frame.

For better access and saving of material, the upper face of the frame between the horizontal members may open and, in operation, covered with a top cover to prevent the emission of UV radiation to the environment.

The top cover may co-operate with a safety switch so that the electric supply to the lamps is cut when the top cover is lifted or otherwise removed or opened.

It is furthermore preferred that, in its operating position on top of the frame, the top cover covers one or more of the attachment elements so that the frame can only be lifted out of the channel when the top cover is removed. This way, the frame can only be attached to the crane harness and lifted from the channel when the power supply to the UV lamps is cut off.

Generally, the position of the required electronics can freely be chosen. The choice may depend upon the size of the equipment, the space that is available and the tolerable length of the cables. However, in a preferred embodiment, an electronics unit is positioned above the upper face of the frame, the electronics unit comprising ballasts for driving the lamps and/or lamp wiper drivers, so that only very few connections from the frame to the facilities that are placed beside the channel are necessary.

Another preferred embodiment may be advantageous because of easier access to the electronics. This embodiment is characterized in that an electronics unit is mounted in a cabinet, said cabinet being positioned adjacent to the channel and at a distance from the frame, the electronics unit comprising ballasts for driving the lamps and/or driving electronics for lamp wipers. The position of the cabinet may for example be chosen such that the cabinet is placed on the bank of the channel next to the frame or even in a dedicated building.

In the following, an embodiment of the present invention is described in greater detail with reference to the drawing, which show:
- Fig. 1:: a frame with top cover without lamp arrays,
- Fig. 2:: the frame of figure 1 in a side view with two lamp arrays installed, and
- Fig. 3:: the frame of figure 2, installed in a water treatment chamber of a channel, in a view in the direction of the water flow.

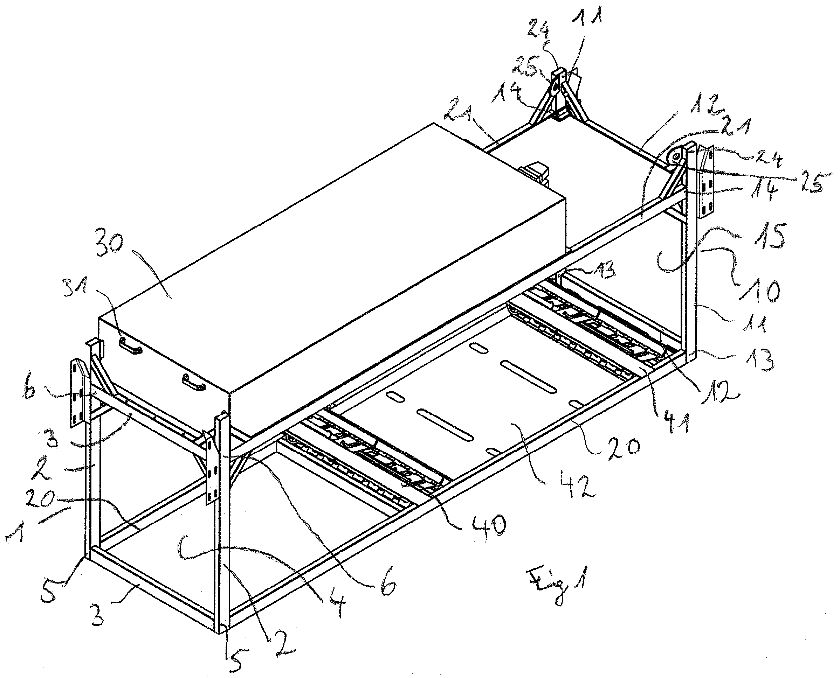

Figure 1 shows the frame of a water disinfection system according to the present invention. The frame has an upstream end 1 with two vertical front frame members 2 and horizontal front frame members 3. The vertical front frame members 2 and the horizontal front frame members 3 are fixed to each other in a 90° angle and therefore define an almost quadratic open front face 4. The joints between the vertical front frame members 2 and the horizontal front frame members 3 define lower corners 5 and upper corners 6.

A downstream end 10, which is the end opposite the upstream end 1, is of a similar construction and comprises two vertical rear frame members 11 and two horizontal rear frame members 12, which are again fixed to each other in lower corners 13 and upper corners 14 in a 90° angle with respect to each other. Accordingly, an almost quadratic open rear face 15 is defined by the two vertical rear frame members and the two horizontal rear frame members.

A frame centre section extends between the upstream end 1 and the downstream end 10. The centre section comprises two lower side frame members 20 and two upper side frame members 21. The lower side frame members 20 extend from the upstream lower corners 5 to the downstream lower corners 13 and define a 90° angle with the adjacent front frame members and rear frame members. Similarly, the upper side frame members 21 extend from the upstream upper corners 6 to the downstream upper corners 14 and are fixed at a right angle to the respective front and rear members. In total, the members of the frame define an essentially cuboid outer shape.

The vertical rear frame members 11 extend in an upward direction beyond the rear upper corners 14 and, at their free ends 24, an eyelet 25 is fixed to each vertical rear frame member 11. Similarly, the vertical front frame members 2 extend in upwards direction beyond the front upper corners 6, and at their free ends, each vertical front frame member 2 carries an eyelet, which is not visible in figure 1. The front eyelets are hidden under a top cover 30 which is placed, in operation, on top of the frame and which is provided with handles 31 for manual lifting of the top cover 30. The top cover 30 covers drive means for mechanical cleaning devices (not shown in figure 1). Additionally, the top cover 30 prevents ultraviolet radiation from leaking into the environment by covering the frame at the top.

The top cover 30 intentionally also covers the front eyelets so that top cover 30 must be removed before fitting a crane harness to the front eyelets. The top cover 30 is connected to a safety switch which cuts off the electric supply to the ultraviolet lamp arrays and therefore guarantees that the ultraviolet radiation is shut down when the top cover is removed. Consequently, because removal of the top cover 30 is necessary to gain access to the front eyelets, these eyelets are also only accessible when the ultraviolet radiation is shut down.

At the bottom face of the frame, which is defined by the lower horizontal front frame member 3, the lower horizontal rear frame member 12 and the two lower horizontal side frame members 20, there is a first bracket 40 and a second bracket 41 extending between the two lower horizontal side frame members 20 and parallel to the lower horizontal front frame member 3. The bracket 40 serves as a holder for an upstream array of ultraviolet lamps, while the second bracket 41 serves as a holder for a second downstream array of ultraviolet lamps, both arrays are not shown in figure and will be referred to later on.

Between the first bracket 40 and the second bracket 41, there may be a plate 42 which covers the bottom face of the frame in that section. However, this plate 42 may be omitted.

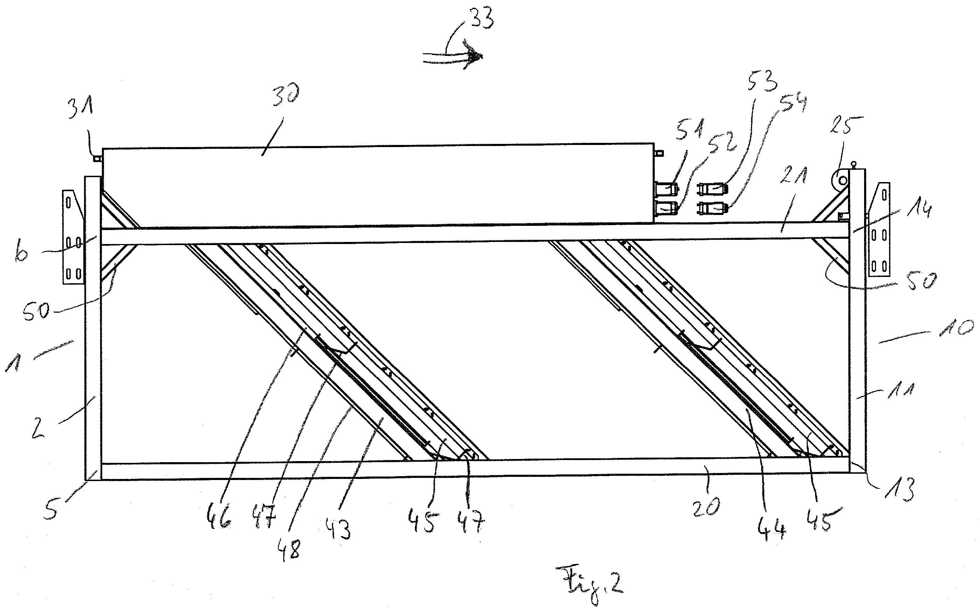

Figure 2 shows the frame of figure 1 in a side view. The same or similar elements are designated with reference numerals.

In the representation of figure 2, the frame carries two lamp arrays, an upstream array 43 and a downstream array 44. The two arrays 43 and 44 are essentially identical in construction. The upstream array 43 will be described in greater detail. Upstream array 43 comprises a number of lamps 45. The lamps 45 are arranged parallel to each other and are lined up in a direction transvers to the flow of water, which is indicated by an arrow 33 above the frame. The line-up of lamps 45 is perpendicular to the plane of the drawing. Therefore, only the single lamp 45 which is next to the viewer, is visible in figure 2. A guide 46 holds a wiper assembly 47, which is used to clean the surface of the lamp 45 on a regular basis. In order to carry out the cleaning process, a drive means (not visible) is placed under the top cover 30 and is dedicated to each array of lamps. The drive means drives the wipers 47 along the guide 46 and wipes the surface of the lamp 45 in a longitudinal direction parallel to its axis of symmetry.

Additional means, for example strips 48 for guiding the water flow towards the lamps 45, are optional.

The lamps 45 and the guides 46 are, at the bottom of the frame, held in the bracket 40, which has been described with reference to figure 1 and which is, in this representation, hidden behind the lower side frame member 20. The top end of the lamp 45 and the guide 46 is firmly held in place by a similar bracket which is also hidden under the top cover 30.

It should be noted that, at the corners 6 and 14, there are diagonal reinforcement elements 50, which increase the stability of the frame.

It can be seen that, at the top cover 30, there are two sockets 51 and 52 for connecting the lamp arrays to a remote operating station, which may include a power supply and other drive and measuring means. Each socket 51 and 52 is contacted by a respective plug 53 and 54 so that only one single connection is necessary to connect each array to the remote power supply and drive. In this case, the first array 43, which is the upstream array, is connected through socket 51 to plug 53, while the second, downstream array 44 is connected through socket 52 to plug 54. Other embodiments, however, may have the electronic ballasts for the lamps placed in a separate cabinet next to the channel.

Whenever maintenance of the water disinfection system is necessary, it is only necessary to remove the two plugs 53 and 54 and the top cover 30 by using the handles 31 in order to open the frame at the top. Access to the top end of the arrays 43 and 44 is then possible. If necessary, further access to the lamp arrays 43 and 44 and the rest of the frame can be gained by attaching a crane harness to the eyelets 25 and the second set of eyelets which is hidden under the top cover 30 in operation, and subsequently lifting the whole frame out of the water treatment chamber and the channel.

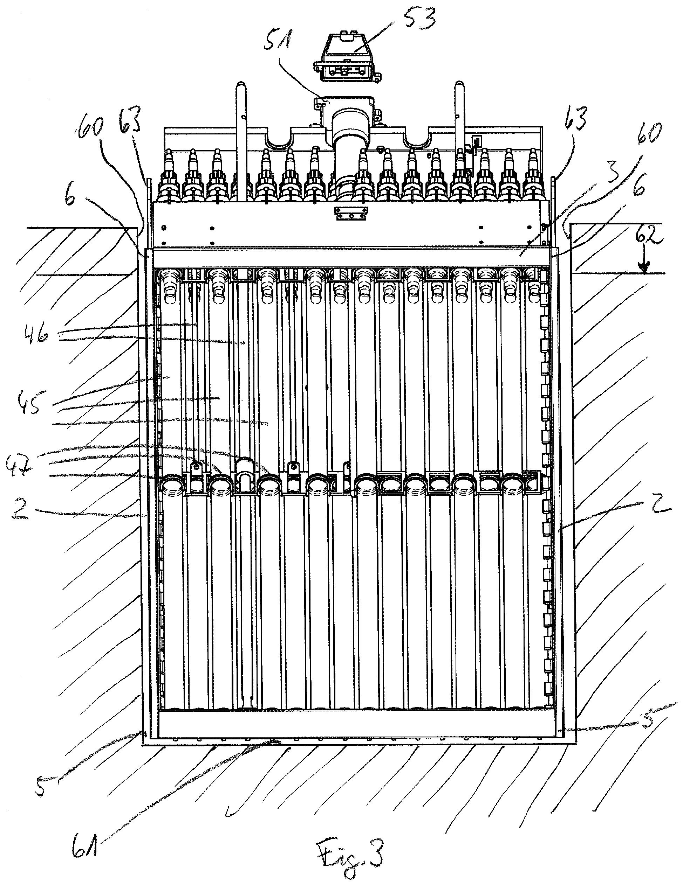

The position of the frame inside the water treatment chamber and the relative position of the lamps of an array is better shown in figure 3, which represents a view on the installation of figure 2 in the direction of the water flow 33, which is perpendicular to the plane of the drawing.

Figure 3 shows a view on the open front face 4 at the upstream end 1 of the frame and the first lamp array 43, which is visible therein. The frame is placed in an operating position inside a water treatment chamber which is defined by vertical side walls 60 and a bottom wall 61. The treatment chamber is open at its top. In operation, the water level may be regulated and rise up to a level indicated with an arrow 62. The channel and the treatment chamber are preferably made of concrete.

The top of the frame including the connections to a power supply through socket 51 and plug 53 has been described above. These connections are visible here because the top cover has been removed. It should be noted that now front or upstream eyelets 63 are visible, which were covered in figs. 1 and 2.

When installing the frame with the arrays in the water treatment chamber, a crane harness is fixed to the attachment elements, which in this embodiment are eyelets 25 and 63. The frame can then be lifted from the ground beneath the channel, or from a truck on which the frame has been delivered, using a mobile or stationary crane. Then, the frame can be lowered into the treatment chamber as shown in fig. 6 and simply be placed on the bottom wall 61 to rest there. An abutment (not shown) may be installed in the channel to prevent unwanted movement of the frame in a downstream direction. After releasing the harness, the top cover 30 may be put in place to close the top of the installation. Then, plugs 53 and 54 can be connected to sockets 51 and 52 and the system can be powered up.

It should be understood that, depending on the requirements, a number of frames can be placed in a line one behind another in the direction of flow, and also beneath each other transverse to the direction of flow. In the latter case, the width of the treatment chamber has to be adapted.

## Claims

1. A water disinfection system comprising
- a flow-through treatment chamber (60, 61), with an inlet and an outlet for the water in an open channel the inlet and the outlet defining a flow direction (33) of a flow of water,
- a plurality of elongated ultraviolet lamps (45) positioned parallel to each other in at least one array (43, 44) within said treatment chamber (60, 61) which at least one array 43, 44) is disposed at an acute angle with respect to and transverse to the flow of water so that the water must pass through the array (43, 44),
- a frame which holds in place the lamps (45) of the array (43, 44) and which is constructed so that all lamps (45) of the at least one array (43, 44) can be lifted out of the chamber (60, 61) simultaneously by lifting the frame,
wherein
- the frame is a stand-alone frame with a cuboid outer shape, the frame having in the direction (33) of the flow of water:
-- an upstream end (1) with two vertical front frame members (2) and two horizontal front frame members (3),
-- a downstream end (10) with two vertical rear frame members (11) and two horizontal rear frame members (12), and
-- a frame centre section with two lower side frame members (20) and two upper side frame members (21),
- the frame is not fixed to the chamber (60, 61),
- the at least one array (43, 44) is contained inside the cuboid shape and
- the frame is positioned in the chamber in an unguided manner and has attachment elements (25, 63) for attaching the frame to a lifting mechanism,
**characterized in that** the acute angle, in which the at least one array (43, 44) is disposed in, is in the range between 30 to 60 degrees.

2. A water disinfection system according to claim 1, **characterized in that** the frame, when being lifted by the lifting mechanism, is freely movable in the direction (33) of the flow of water and in the vertical direction.

3. A water disinfection system according to any one of the preceding claims, **characterized in that** the attachment elements (25, 63) are positioned at the four upper corners (6, 14) of the frame.

4. A water disinfection system according to any one of the preceding claims, **characterized in that** the attachment elements (25, 63) are eyelets or openings.

5. A water disinfection system according to any one of the preceding claims, **characterized in that** the frame has an open front face, an open rear face, open side faces and an open bottom face.

6. A water disinfection system according to any one of the preceding claims, **characterized in that** the upper face of the frame between the upper horizontal members (3, 12, 21) is open and, in operation, covered with a top cover (30).

7. A water disinfection system according to any one of the preceding claims, **characterized in that** the top cover (30) co-operates with a safety switch so that the electric supply to the lamps (45) is cut when the top cover (30) is lifted or otherwise removed or opened.

8. A water disinfection system according to any one of the preceding claims, **characterized in that,** in an operating position on the frame, the top cover (30) covers one or more of the attachment elements (63) so that the frame can only be lifted out of the channel (60, 61) when the top cover (30) is removed.

9. A water disinfection system according to any one of the preceding claims, **characterized in that** an electronics unit is positioned above the upper face of the frame, the electronics unit comprising ballasts for driving the lamps (45) and/or driving electronics for lamp wipers (47).

10. A water disinfection system according to any one of the preceding claims 1 - 8, **characterized in that** an electronics unit is mounted in a cabinet, said cabinet being positioned adjacent to the channel and at a distance from the frame, the electronics unit comprising ballasts for driving the lamps (45) and/or driving electronics for lamp wipers (47).

## Patentansprüche

1. Wasserdesinfektionssystem, aufweisend
- eine Durchfluss-Behandlungskammer (60, 61) mit einem Einlass und einem Auslass für das Wasser in einem offenen Kanal, wobei der Einlass und der Auslass eine Strömungsrichtung (33) einer Wasserströmung definieren,
- eine Vielzahl von länglichen UV-Lampen (45), die parallel zueinander in mindestens einer Anordnung (43, 44) innerhalb der Behandlungskammer (60, 61) angeordnet sind, wobei die mindestens eine Anordnung (43, 44) in einem spitzen Winkel zu und quer zur Wasserströmung angeordnet ist, so dass das Wasser die Anordnung (43, 44) passieren muss,
- einen Rahmen, der die Lampen (45) der Anordnung (43, 44) an ihrem Platz hält und so konstruiert ist, dass alle Lampen (45) der mindestens einen Anordnung (43, 44) durch Anheben des Rahmens gleichzeitig aus der Kammer (60, 61) herausgehoben werden können, wobei
- der Rahmen ein eigenständiger Rahmen mit einer quaderförmigen Außenform ist, wobei der Rahmen in Richtung (33) der Wasserströmung aufweist:
-- ein stromaufwärts gelegenes Ende (1) mit zwei vertikalen vorderen Rahmenelementen (2) und zwei horizontalen vorderen Rahmenelementen (3),
-- ein stromabwärts gelegenes Ende (10) mit zwei vertikalen hinteren Rahmenelementen (11) und zwei horizontalen hinteren Rahmenelementen (12) und
-- einen mittleren Rahmenabschnitt mit zwei unteren Seitenrahmenelementen (20) und zwei oberen Seitenrahmenelementen (21),
- der Rahmen nicht an der Kammer (60, 61) befestigt ist,
- die mindestens eine Anordnung (43, 44) innerhalb der Quaderform enthalten ist und
- der Rahmen in der Kammer ungeführt positioniert ist und Befestigungselemente (25, 63) zum Befestigen des Rahmens an einem Hebemechanismus aufweist,
**dadurch gekennzeichnet, dass** der spitze Winkel, in dem die mindestens eine Anordnung (43, 44) angeordnet ist, im Bereich zwischen 30 und 60 Grad liegt.

2. Wasserdesinfektionssystem nach Anspruch 1, **dadurch gekennzeichnet, dass** der Rahmen, wenn er durch den Hebemechanismus angehoben wird, in Strömungsrichtung (33) des Wassers und in vertikaler Richtung frei beweglich ist.

3. Wasserdesinfektionssystem nach einem der vorstehenden Ansprüche, **dadurch gekennzeichnet, dass** die Befestigungselemente (25, 63) an den vier oberen Ecken (6, 14) des Rahmens positioniert sind.

4. Wasserdesinfektionssystem nach einem der vorstehenden Ansprüche, **dadurch gekennzeichnet, dass** die Befestigungselemente (25, 63) Ösen oder Öffnungen sind.

5. Wasserdesinfektionssystem nach einem der vorstehenden Ansprüche, **dadurch gekennzeichnet, dass** der Rahmen eine offene Vorderseite, eine offene Rückseite, offene Seitenflächen und eine offene Unterseite aufweist.

6. Wasserdesinfektionssystem nach einem der vorstehenden Ansprüche, **dadurch gekennzeichnet, dass** die Oberseite des Rahmens zwischen den oberen horizontalen Elementen (3, 12, 21) offen ist und im Betrieb mit einer oberen Abdeckung (30) abgedeckt wird.

7. Wasserdesinfektionssystem nach einem der vorstehenden Ansprüche, **dadurch gekennzeichnet, dass** die obere Abdeckung (30) mit einem Sicherheitsschalter zusammenwirkt, so dass die Stromversorgung der Lampen (45) unterbrochen wird, wenn die obere Abdeckung (30) angehoben oder auf andere Weise entfernt oder geöffnet wird.

8. Wasserdesinfektionssystem nach einem der vorstehenden Ansprüche, **dadurch gekennzeichnet, dass** in einer Betriebsposition auf dem Rahmen die obere Abdeckung (30) eines oder mehrere der Befestigungselemente (63) abdeckt, so dass der Rahmen nur aus dem Kanal (60, 61) herausgehoben werden kann, wenn die obere Abdeckung (30) entfernt wird.

9. Wasserdesinfektionssystem nach einem der vorstehenden Ansprüche, **dadurch gekennzeichnet, dass** eine Elektronikeinheit über der Oberseite des Rahmens angeordnet ist, wobei die Elektronikeinheit Vorschaltgeräte zum Ansteuern der Lampen (45) und/oder Ansteuerelektronik für Lampenwischer (47) umfasst.

10. Wasserdesinfektionssystem nach einem der vorstehenden Ansprüche 1 bis 8, **dadurch gekennzeichnet, dass** eine Elektronikeinheit in einem Schrank montiert ist, wobei der Schrank neben dem Kanal und in einem Abstand vom Rahmen angeordnet ist, wobei die Elektronikeinheit Vorschaltgeräte zum Ansteuern der Lampen (45) und/oder Ansteuerelektronik für Lampenwischer (47) umfasst.

## Revendications

1. Système de désinfection de l'eau comprenant
- une chambre de traitement à passage direct (60, 61), avec une entrée et une sortie pour l'eau dans un canal ouvert, l'entrée et la sortie définissant une direction d'écoulement (33) d'un écoulement d'eau,
- une pluralité de lampes ultraviolettes allongées (45) positionnées parallèlement les unes aux autres dans au moins un réseau (43, 44) à l'intérieur de ladite chambre de traitement à passage direct (60, 61), lequel au moins un réseau (43, 44) est disposé à un angle aigu par rapport à et transversalement à l'écoulement d'eau de sorte que l'eau doit traverser le réseau (43, 44),
- un cadre qui maintient en place les lampes (45) du réseau (43, 44) et qui est construit de sorte que toutes les lampes (45) du ou des réseaux (43, 44) peuvent être retirées simultanément de la chambre (60, 61) par levage du cadre, lequel
- le cadre est un cadre autonome avec une forme extérieure parallélépipédique, le cadre ayant, dans la direction (33) de l'écoulement d'eau :
-- une extrémité amont (1) avec deux éléments verticaux avant du cadre (2) et deux éléments horizontaux avant du cadre (3),
-- une extrémité aval (10) avec deux éléments verticaux arrière du cadre (11) et deux éléments horizontaux arrière du cadre (12), et
-- une section centrale du cadre avec deux éléments latéraux inférieurs du cadre (20) et deux éléments latéraux supérieurs du cadre (21),
- le cadre n'est pas fixé à la chambre de traitement à passage direct (60, 61),
- le ou les réseaux (43, 44) sont contenus à l'intérieur de la forme parallélépipédique et
- le cadre est positionné dans la chambre de traitement à passage direct de manière non guidée et comporte des éléments de fixation (25, 63) pour fixer le cadre à un mécanisme de levage,
**caractérisé en ce que** l'angle aigu, dans lequel le ou les réseaux (43, 44) sont disposés, est dans la plage de 30 à 60 degrés.

2. Système de désinfection de l'eau selon la revendication 1, **caractérisé en ce que** le cadre, lorsqu'il est soulevé par le mécanisme de levage, est librement mobile dans la direction (33) de l'écoulement d'eau et dans la direction verticale.

3. Système de désinfection de l'eau selon l'une quelconque des revendications précédentes, **caractérisé en ce que** les éléments de fixation (25, 63) sont positionnés aux quatre coins supérieurs (6, 14) du cadre.

4. Système de désinfection de l'eau selon l'une quelconque des revendications précédentes, **caractérisé en ce que** les éléments de fixation (25, 63) sont des oeillets ou des ouvertures.

5. Système de désinfection de l'eau selon l'une quelconque des revendications précédentes, **caractérisé en ce que** le cadre présente une face avant ouverte, une face arrière ouverte, des faces latérales ouvertes et une face inférieure ouverte.

6. Système de désinfection de l'eau selon l'une quelconque des revendications précédentes, **caractérisé en ce que** la face supérieure du cadre entre les éléments horizontaux supérieurs (3, 12, 21) est ouverte et, en fonctionnement, recouverte par un couvercle supérieur (30).

7. Système de désinfection de l'eau selon l'une quelconque des revendications précédentes, **caractérisé en ce que** le couvercle supérieur (30) coopère avec un interrupteur de sécurité de sorte que l'alimentation électrique des lampes (45) est coupée lorsque le couvercle supérieur (30) est soulevé ou autrement retiré ou ouvert.

8. Système de désinfection de l'eau selon l'une quelconque des revendications précédentes, **caractérisé en ce que**, en position de fonctionnement sur le cadre, le couvercle supérieur (30) recouvre un ou plusieurs des éléments de fixation (63) de sorte que le cadre ne peut être retiré du canal ouvert (60, 61) que lorsque le couvercle supérieur (30) est retiré.

9. Système de désinfection de l'eau selon l'une quelconque des revendications précédentes, **caractérisé en ce qu'**une unité électronique est positionnée au-dessus de la face supérieure du cadre, l'unité électronique comprenant des ballasts pour alimenter les lampes (45) et/ou une électronique de commande pour des essuie-lampes (47).

10. Système de désinfection de l'eau selon l'une quelconque des revendications 1 à 8, **caractérisé en ce qu'**une unité électronique est montée dans une armoire, ladite armoire étant positionnée à proximité du canal ouvert et à une distance du cadre, l'unité électronique comprenant des ballasts pour alimenter les lampes (45) et/ou une électronique de commande pour des essuie-lampes (47).
